# EUROPEAN PATENT SPECIFICATION

(11) **EP 0 630 603 B1**
(45) Date of publication and mention of the grant of the patent: **18.03.1998**
(21) Application number: 93830327.8
(22) Date of filing: 23.07.1993
(51) Int. Cl.: A47J 31/56, G01F 23/16

(54) **Signalling device for communicating reaching of a predetermined liquid level in a feed tank, in particular for electrically working apparatus**
Vorrichtung zur Angabe, dass eine Flüssigkeit in einem Behälter ein bestimmtes Niveau erreicht, insbesondere für elektrisch betriebene Geräte
Dispositif pour signaler qu'un liquide atteint un certain niveau dans un réservoir, en particulier pour des machines électriques

(30) Priority: 25.06.1993 IT MI930528 U
(43) Date of publication of application: 28.12.1994
(73) Proprietor: SIGNAL LUX INTERNATIONAL S.A., 8009 Strassen (LU)
(72) Inventor: Gallone, Cesare, deceased (IT)
(74) Representative: Righetti, Giuseppe

(56) References cited:
- DE-A- 2 042 241
- FR-A- 2 188 986
- FR-A- 2 653 877
- GB-A- 2 140 286
- US-A- 2 054 579
- US-A- 3 765 568

## Description

The present invention relates to a signalling device for communicating reaching of a predetermined liquid level in feed tanks, in particular for electrically working apparatus, comprising: a supporting housing; a tank located in the supporting housing; a microswitch operatively connected to an electric control circuit; transducer means operating between the tank and the microswitch for triggering operation of the microswitch when the amount of liquid in the tank overcomes a predetermined safety limit.

A device having the features of the preamble of claim 1 is described for example in GB-A-2140286.

In the embodiment hereinafter described, the device in reference is especially envisaged for use on small household appliances. Obviously the innovatory concepts proposed in the present invention can be used in apparatus different from those particularly referred to in the following description.

It is known that in feed tanks usually associated with household electrical appliances, such as for example coffee making machines and other machines for producing hot beverages, steam producing and dispensing machines and still other machines, particular expedients are normally required for immediately identifying when a predetermined level (usually the minimum level) has been reached in the tank by the water or any other liquid contained therein.

In the connection, in many embodiments the tank is provided to be made of a transparent material and to be located in the household appliance in such a manner that the level of the water contained therein may be easily seen from the outside.

In the embodiment of the above type however, the fact that the tank is to be arranged at a location where it is partially visible involves undesired restrictions to the design of the whole appliance.

In addition and above all, the solutions of the above type are not capable of informing the user immediately and in an efficient manner that the minimum water level has been reached and are not at all capable of activating, if required, safety devices capable of cutting off the current supply to the appliance when the amount of water in the tank is under said minimum level. Therefore, it may often happen that the user does not pay due attention to the water level in the tank and keeps the appliance working even in the complete absence of water. In the frequent cases in which electric resistors are to be activated for water heating, this situation causes the resistors to be maintained at a high temperature in spite of the continuous control carried out by one or more thermostats usually associated therewith.

According to other solutions, the tank is associated with at least one microswitch operatively connected to an electric control circuit which is actuated upon command of transducer means usually consisting of a floater, so that at the moment that the water goes beyond a minimum level an electric signalling is produced. The electric signalling produced in the circuit associated with the microswitch is then used for transmitting a warning signal to the operator, for example by means of a warning light or an acoustic signaller, and/or for breaking the current supply to given members of the appliance, such as pumps, resistors and the like, that could undergo damages or cause danger situations, should they work in the absence of water.

While these signalling devices are more efficient than the previously described solutions, they involve some construction complexity, also due to the number of safety measures to be adopted owing to the presence of electric components, such as microswitches, operating in the presence of water. The construction complexity of these devices is further increased when the possibility of removing the tank from the supporting housing of the electrical appliance must be provided in order to facilitate filling and cleaning operations.

The main object of the present invention is substantially to solve the problems of the known art by providing a signalling device that, while exhibiting a very reduced bulkiness and a great flexibility of use, is also capable of intervening on one or more microswitches disposed even an important distance away from the water tank, under completely safe conditions.

Another object of the invention is to produce a device offering a simplified construction and also the possibility of completely removing the tank from the supporting housing in which it is fitted.

The foregoing and further objects that will become more apparent in the course of the present description are substantially attained by a signalling device for communicating reaching of a predetermined liquid level in feed tanks, in particular for electrically working apparatus, characterized in that said transducer means comprises a flexible receptacle hermetically closed and partially filled with a working fluid, which receptacle has one work portion operatively interposed between said tank and a first locating surface formed in the supporting housing, and a second work portion projecting sideways from the tank and operatively interposed between a second locating surface formed in the supporting housing and said microswitch, said tank being engaged in the supporting housing in such a manner that it can slide in a vertical direction for transmitting the weight of the liquid contained therein to the first work portion of the flexible receptacle, so that said microswitch, following an expansion carried out by the second work portion, is selectively switched over between a first operating condition to which a greater amount of liquid than the safety liquid level corresponds, and a second operating condition to which a lower amount of liquid than said safety liquid level corresponds.

Further features and advantages will better be understood from the detailed description of a preferred embodiment of a signalling device for communicating reaching of a predetermined liquid level in feed tanks for electrically working apparatus in accordance with the present invention, given hereinafter by way of non-limiting example with reference to the accompanying drawings, in which:
- Fig. 1 is a sectional view taken along, line I-I in Fig. 1, showing the device in reference in a first operating condition;
- Fig. 2 is a sectional view similar to that of Fig. 1, in which the device is arranged in a second operating condition;
- Fig. 3 shows the device sectioned along line III-III in Fig. 4;
- Fig. 4 shows the device partly sectioned along line IV-IV in Fig. 1.

Referring to the drawings, a signalling device for communicating reaching of a predetermined liquid level in a feed tank, in particular for electrically working apparatus, in accordance with the present invention has been generally identified by reference numeral 1.

The device 1 conventionally involves the presence of a tank 2 optionally provided with a supporting housing 3 which may for example belong to the framework of a household appliance such as a coffee maker.

Such as appliance, not shown as known and conventional, draws water or another liquid disposed in the tank 2, when necessary, through appropriate suction ducts or equivalent means, not shown too as known and not of importance to the ends of the present invention.

Preferably, the tank 2 is removably engaged in the supporting housing 3 and can oscillate in a vertical direction, for purposes to be clarified in the following, and can be removed for facilitating water supply operations.

The device 1 further comprises at least one microswitch 4 fastened to the supporting housing 3 and operatively connected to an electric control circuit, not shown as well as known per se and conventional.

A transducer means operates between the microswitch 4 and tank 2 and it is such arranged as to cause the actuation of the microswitch when the amount of water contained in the tank 2 overcomes a predetermined safety level. In the embodiment shown this safety level is represented by a minimum water level and when this level is reached it is necessary to carry out the tank filling.

Obviously, in other applications the safety level could be the maximum water level and when said maximum level is reached it will be necessary to empty the tank.

In accordance with the invention, the transducer means comprises a hermetically closed flexible receptacle 5 consisting for example of a tubular film made of plastic material such as polyethylene or polyamide, heat sealed at its ends and partially filled with a working fluid of the liquid type or, alternatively, of the gaseous type. The tubular film may also consist of a double polyethylene or polyamide layer so that it is more impervious.

In the embodiment shown, the working fluid is water and the flexible receptacle is filled with the working fluid until about half its overall capacity.

Defined along the extension of the flexible receptacle 5 is a first work portion 6 operatively interposed between the tank 2 and a first locating surface 7 exhibited by the supporting housing 3, as well as at least one second work portion 8 projecting sideways from the tank 2 and being operatively interposed between the microswitch 4 and a second locating surface 9 formed in the supporting housing.

In the embodiment shown the first and second work portions 6, 8 are consecutively aligned in a horizontal direction, and consequently the first and second locating surfaces 7, 9 are aligned in the same manner. Obviously, the second work portion 8 could also be disposed in a different manner than described, rotated through 90° for example, relative to the first work portion 6.

As shown in the accompanying drawings, the first work portion 6 is located under the tank bottom 2b, so that it is subjected to a variable squeezing force depending on the weight, and therefore the amount of water or other liquid contained in the tank 2.

The second work portion 8, horizontally in alignment with the first work portion, is in turn disposed under the microswitch 4 and acts on an actuation element 4a conventionally exhibited by said microswitch, through a transducer plate 10 fastened to the second work portion, by gluing for example.

Actuation of the microswitch 4 takes place against the action exerted by preloading means that, in a preferential solution, are directly represented by the actuation element itself 4a which, for the purpose of activating the inner mechanisms of the microswitch, offers a predetermined mechanical resistance against the displacement imposed by the transducer plate 10. Obviously said preloading means can for example also envisage the arrangement of a calibrated weight on the transducer plate 10 and/or, as shown in the accompanying drawings, the arrangement of one or more preloading springs 10a operating between the transducer plate and the microswitch 4.

Operation of the device according to the invention described above mainly as regards structure, is as follows.

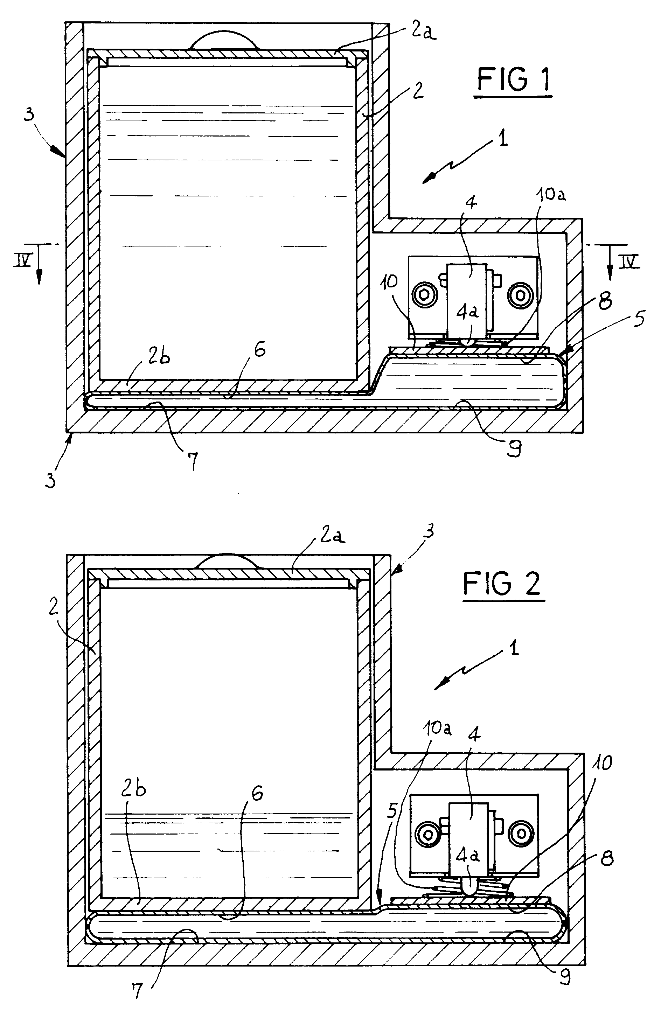

When the tank 2 is introduced into the supporting housing 3, the first work portion 6 of the flexible receptacle 5 is squeezed under the weight of the tank and the water contained therein, as shown in Fig. 2. Under this situation, transferring of the working fluid contained in the receptacle 5 from the first 6 to the second work portion 8 occurs. Therefore said second work portion 8 expands upwardly, leading the transducer plate 10 to act on the actuation element 4a of the microswitch 4.

The squeezing action induced on the first work portion 6 tends to generate a hydrostatic pressure in the flexible receptacle 5, the value of which is substantially proportional to the amount of water contained in the tank. More particularly, the value of this hydrostatic pressure corresponds to the ratio between the weight of the tank and water contained therein and the contact surface of the tank bottom 2b on the first work portion 6 of the receptacle 5.

By effect of this hydrostatic pressure, the transducer plate 10 is pushed upwardly by a force corresponding to the product of the hydrostatic pressure by the contact surface between the plate and second work portion 8 of the receptacle 5.

When the water level in the tank 2 is higher than the predetermined safety level, the hydrostatic pressure induced in the receptacle 5 reaches such a degree that the thrust force transmitted by the plate 10 is sufficient to win the resistance to displacement of the actuation element 4a of the microswitch 4. The microswitch 4 is thus arranged in a first operating condition to which closure of, for example, the electric control circuit associated therewith corresponds.

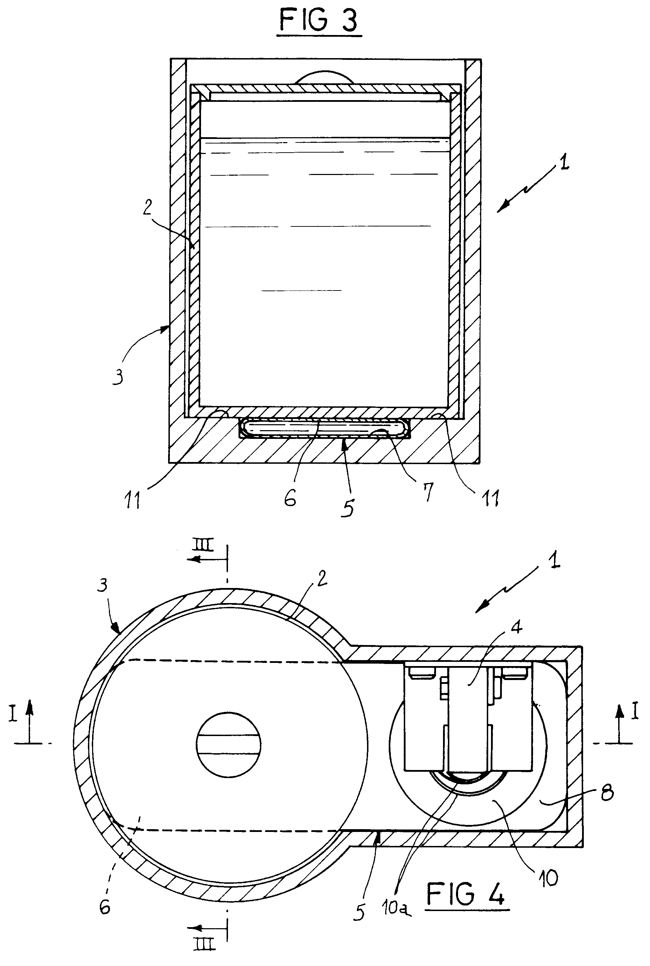

In order to prevent the first work portion 6 of the receptacle 5 from collapsing too much when the tank 2 is filled and make the tank itself steadier, in said first operating condition the tank bottom 2a may rest on abutment surfaces 11 (figure 3) arranged in the supporting housing 3 sideways of the first work portion.

When the amount of water decreases beyond the predetermined safety level, the hydrostatic pressure produced within the flexible receptacle 3 is no more sufficient to win the thrust action exerted by the actuation element 4a of the microswitch 4. The microswitch 4 therefore takes a second operating position causing a downward displacement of the plate 10 and a slight raising of the tank 2 as a result of transferring of the working fluid contained in the flexible receptacle 5 from the second work portion 8 to the first work portion 6.

The second operating condition of the microswitch 4 may far example involve cutoff of the electric control circuit so as to enable an optical and/or acoustic warning signal to be transmitted to the user, and/or to inhibit current supply to given members such as pumps, electric resistors or other members belonging to the machine with which the device in question is associated.

For the sake of clarity, in Figs. 1 and 2 the vertical movement of the trasducer plate and tank 2 has been exaggerated as compared with the value actually found in practical use.

Advantageously, the dimensional features of the transducer plate 10 and, in particular, the extension of the surface thereof in contact with the second work portion lend themselves to be selected every time based on the dimensional features of the tank 2 and the flexible receptacle 5, and on the force necessary to cause the displacement of the actuation element 4a of the microswitch 4, depending on the desired height of the safety level at which switching of the microswitch is wished.

In the connection, for a complete explanation, an example of how to calculate the surface extension of the transducer plate 10 is set forth hereinafter, starting from the following data:
- the tank 2 has a cylindrical conformation and its base diameter is 12 cm;
- the contact surface between the tank bottom 2a and the first work portion 6 is represented by a rectangular area of 12x4 cm;
- the force necessary to move the actuation element 4a of the microswitch 4 from the first operating condition to the second one corresponds to 50 g;
- the height of the safety level at which switching of the microswitch 4 is to be operated corresponds to 2 cm from the bottom 2b.

The foregoing being stated, on reaching of the safety level, the hydrostatic pressure exerted by the water on the tank bottom corresponds to 2 g/cm². Therefore, ignoring for the sake of simplicity the weight of the tank 2, the overall force acting an the bottom of said tank by effect of the water weight will have a value of 226 g corresponding to the product of said hydrostatic pressure by the surface extension of the bottom itself, that is 113 cm².

This force is transmitted to the first work portion 6 of the flexible receptacle 5, thereby creating therein a hydrostatic pressure corresponding to the ratio between the force itself and the contact surface of the bottom 2b on the first work portion 6. Considering that the contact surface of the first work portion 6 on the bottom 2a is represented by a rectangular area measuring 12x4 cm, the value of the hydrostatic pressure within the flexible receptacle will correspond to 4.7 g/cm².

As a result, the surface extension of the transducer plate 10 will have a value of 10.6 cm², corresponding to the ratio between the force (50 g) transmitted from the actuation element 4a to the plate itself and the hydrostatic pressure (4.7 g/cm²) induced in the flexible receptacle 5.

The present invention attains the intended purposes. The device in question in fact has a much simplier structure than similar known devices designed to emit an electric signal when a predetermined liquid level is reached within the tank. In particular, the configuration of the transducer means embodied by the flexible receptacle 5 is very simplified as compared with the mechanical articulated members provided when transducer means involving a floater or the like are used, in accordance with the known art.

In addition and above all, the use of the flexible receptacle enables the microswitch 4 to be disposed even a great distance away from the tank 2 and, therefore, at a position conveniently protected against accidental contacts with water.

It is also to be pointed out that with the device in question the application of any mechanical pieces directly to the tank is not required, and the tank can be easily removed from the supporting housing 3 in order to facilitate the filling operations without running the risk that the transducer means may be damaged on handling.

It is understood that many modifications and variations may be made to the invention without departing from the scope of the appended claims.

## Claims

1. A signalling device for communicating reaching of a predetermined liquid level in feed tanks, in particular for electrically working apparatus, comprising:
- a supporting housing (3);
- a tank (2) located in the supporting housing (3);
- a microswitch (4) operatively connected to an electric control circuit;
- transducer means (5) operating between the tank (2) and the microswitch (4) for triggering operation of the microswitch when the amount of liquid in the tank (2) overcomes a predetermined safety limit,
characterized in that said transducer means comprises a flexible receptacle (5) hermetically closed and partially filled with a working fluid, which receptacle has one work portion (6) operatively interposed between said tank (2) and a first locating surface (7) formed in the supporting housing (3), and a second work portion (8) projecting sideways from the tank (2) and operatively interposed between a second locating surface (9) formed in the supporting housing (3) and said microswitch (4),
said tank (2) being engaged in the supporting housing (3) in such a manner that it can slide in a vertical direction for transmitting the weight of the liquid contained therein to the first work portion (6) of the flexible receptacle (5), so that said microswitch (5), following an expansion carried out by the second work portion (8), is selectively switched over between a first operating condition to which an amount of liquid greater than the safety liquid level corresponds, and a second operating condition to which an amount of liquid lower than said safety liquid level corresponds.

2. A signalling device according to claim 1, characterized in that it further comprises preloading means (4a, 10a) acting on the second work portion (8) of the flexible receptacle (5) for resisting switching over of the microswitch (4) from the second to the first operating condition.

3. A signalling device according to claim 2, characterized in that said preloading means comprises an actuation element (4a) associated with said microswitch (4) and acting an the second work portion (8) with a predetermined preloading force when the microswitch (4) is switched over to the first operating condition.

4. A signalling device according to claim 2, characterized in that said preloading means comprises at least one spring (10a) operatively interposed between the microswitch (4) and the second work portion (8).

5. A signalling device according to claim 1, characterized in that it further comprises at least one transducer plate (10) operatively interposed between the second work portion (8) and said microswitch (4) and acting on the second work portion itself over a predetermined contact surface.

6. A signalling device according to claim 1, characterized in that the working fluid contained in the flexible receptacle (5) is a liquid.

7. A signalling device according to claim 1, characterized in that the working fluid contained in the flexible receptacle (5) is a gaseous fluid.

8. A signalling device according to claim 1, characterized in that said flexible receptacle (5) is filled with said working fluid substantially until half its maximum capacity.

9. A signalling device according to claim 1, characterized in that said flexible receptacle (5) comprises a tubular element made of plastic material and heat sealed at its ends.

10. A signalling device according to claim 1, characterized in that said first and second work portions (6, 8) are aligned consecutively in a horizontal direction, said microswitch (4) being located over said work portion (8).

11. A signalling device according to claim 1, characterized in that said supporting housing (3) has abutment surfaces (11) disposed sideways of the first work portion (6) of the flexible receptacle (5) and such arranged that said tank (2) may rest thereon when the microswitch (4) is switched over to the first operating condition.

12. A signalling device according to claim 1, characterized in that said tank (2) is removably engaged to the supporting housing (3).

## Patentansprüche

1. Vorrichtung zur Angabe, daß eine Flüssigkeit in einem Behälter ein bestimmtes Niveau erreicht, insbesondere für elektrisch betriebene Geräte, umfassend:
- eine Trag- und Aufnahmekonstruktion;
- einen in der Trag- und Aufnahmekonstruktion aufgenommenen Behälter;
- einen Mikroschalter, der wirksam mit einem Steuerstromkreis verbunden ist;
- Gebermittel, die zwischen dem Behälter und dem Mikroschalter wirken, um die Betätigung dieses letzteren zu steuern, sobald die Flüssigkeitsmenge im Behälter ein vorgegebenes Sicherheitsniveau überschreitet;
dadurch gekennzeichnet, daß die Gebermittel eine hermetisch abgeschlossene, flexible Hülle umfassen, die teilweise mit einem Arbeitsmittel gefüllt ist und einen ersten zwischen dem Behälter und einer in der Trag- und Aufnahmekonstruktion ausgenommenen Anschlagfläche liegenden Arbeitsabschnitt, sowie einen zweiten Arbeitsabschnitt aufweist, der seitlich gegenüber dem Behälter vorsteht und wirksam zwischen einer zweiten, in der Trag- und Aufnahmekonstruktion ausgenommenen Anschlagfläche und dem Mikroschalter liegt,
wobei der Behälter in der Trag- und Aufnahmekonstruktion in Eingriff steht, mit der Möglichkeit in vertikaler Richtung zu gleiten, um das Gewicht der in ihm enthaltenen Flüssigkeit auf den ersten Arbeitsabschnitt der flexiblen Hülle zu übertragen, wodurch der Mikroschalter, zufolge einer vom zweiten Arbeitsabschnitt durchgeführten Ausdehnung, zwischen einer ersten Arbeitsstellung, dem eine Flüssigkeitsmenge oberhalb des Sicherheitsniveaus entspricht, und einer zweiten Arbeitsstellung wahlweise umgeschalten wird, der ein Flüssigkeitsniveau entspricht, das unterhalb des Sicherheitsniveaus liegt.

2. Vorrichtung nach Anspruch 1, dadurch gekennzeichnet, daß sie überdies Vorspannmittel umfaßt, die auf den zweiten Arbeitsabschnitt der flexiblen Hülle wirken, um der Umschaltung des Mikroschalters von der zweiten Arbeitsstellung in die erste entgegenzuwirken.

3. Vorrichtung nach Anspruch 2, dadurch gekennzeichnet, daß die Vorspannmittel ein Arbeitselement umfassen, das dem Mikroschalter zugeordnet ist und auf den zweiten Arbeitsabschnitt mit einer vorgegebenen Vorspannkraft wirkt, sobald der Mikroschalter in die erste Arbeitsstellung umgeschalten ist.

4. Vorrichtung nach Anspruch 2, dadurch gekennzeichnet, daß die Vorspannmittel mindestens eine Feder umfassen, die wirksam zwischen dem Mikroschalter und dem Geberteller liegt.

5. Vorrichtung nach Anspruch 1, dadurch gekennzeichnet, daß sie überdies mindestens einen Geberteller umfaßt, der wirksam zwischen dem zweiten Arbeitsabschnitt und dem Mikroschalter liegt und auf den zweiten Arbeitsabschnitt selbst längs einer vorgegebenen Berührungsfläche wirkt.

6. Vorrichtung nach Anspruch 1, dadurch gekennzeichnet, daß das in der flexiblen Hülle enthaltene Arbeitsmittel aus einer Flüssigkeit besteht.

7. Vorrichtung nach Anspruch 1, dadurch gekennzeichnet, daß das in der flexiblen Hülle enthaltene Arbeitsmittel aus einem gasförmigen Mittel besteht.

8. Vorrichtung nach Anspruch 1, dadurch gekennzeichnet, daß die flexible Hülle mit dem Arbeitsmittel im wesentlichen zur Hälfte ihrer höchsten Aufnahmefähigkeit gefüllt ist.

9. Vorrichtung nach Anspruch 1, dadurch gekennzeichnet, daß die flexible Hülle ein Rohrelement aus Kunststoff umfaßt, das an den Enden thermogeschweißt ist.

10. Vorrichtung nach Anspruch 1, dadurch gekennzeichnet, daß der erste und der zweite Arbeitsabschnitt nacheinander in horizontaler Richtung ausgerichtet sind, wobei der Mikroschalter oberhalb des zweiten Arbeitsabschnittes angeordnet ist.

11. Vorrichtung nach Anspruch 1, dadurch gekennzeichnet, daß die Trag- und Aufnahmekonstruktion Anschlagflächen aufweist, die gegenüber dem ersten Arbeitsabschnitt der flexiblen Hülle seitlich angeordnet und dazu bereitgestellt sind, dem Behälter eine Auflage anzubieten, sobald der Mikroschalter in der ersten Arbeitsstellung umgeschaltet ist.

12. Vorrichtung nach Anspruch 1, dadurch gekennzeichnet, daß der Behälter abnehmbar an der Trag- und Aufnahmekonstruktion in Eingriff steht.

## Revendications

1. Dispositif pour signaler qu'un liquide a atteint un certain niveau dans des réservoirs, en particulier pour des machines électriques, comprenant:
- une structure de logement et support (3);
- un réservoir (2) situé dans la structure de logement et support (3);
- un microinterrupteur (4) relié de manière opératoire à un circuit électrique de commande;
- des moyens transducteurs (5) opérant entre le réservoir (2) et le microinterrupteur (4) pour déclencher le fonctionnement du microinterrupteur quand la quantité de liquide dans le réservoir (2) dépasse une limite prédéterminée de sécurité,
caractérisé en ce que lesdits moyens transducteurs comportent une enveloppe flexible (5) fermée hermétiquement et partiellement remplie d'un fluide de travail, cette enveloppe ayant une portion de travail (6) intercalée de manière opératoire entre ledit réservoir (2) et une première surface de référence (7) formée dans la structure de logement et support (3), et une deuxième portion de travail (8) faisant saillie latéralement du réservoir (2) et intercalée de manière opératoire entre une deuxième surface de référence (9) formée dans la structure de logement et support (3) et ledit microinterrupteur (4),
ledit récipient (2) étant engagé dans la structure de logement et support (3) de telle manière qu'il peut glisser en direction verticale pour transmettre le poids du liquide y contenu à la première portion de travail (6) de l'enveloppe flexible (5), pour que ledit microinterrupteur (4), à la suite d'une dilatation effectuée par la deuxième portion de travail (8), puisse sélectivement changer entre une première condition de travail à laquelle correspond une quantité de liquide supérieure au niveau de liquide de sécurité, et une deuxième condition de travail à laquelle correspond une quantité de liquide inférieure au niveau de liquide de sécurité.

2. Dispositif de signalisation selon la revendication 1, caractérisé en ce qu'il comporte en outre des moyens de pré-charge (4a, 10a) agissant sur la deuxième portion de travail (8) de l'enveloppe flexible (5) pour s'opposer au changement de condition du microinterrupteur (4) depuis la deuxième jusqu'à la première condition de travail.

3. Dispositif de signalisation selon la revendication 2, caractérisé en ce que lesdits moyens de pré-charge comportent un élément d'actionnement (4a) associé audit microinterrupteur (4) et agissant sur la deuxième portion de travail (8) par une force de pré-charge prédéterminée quand le microinterrupteur (4) est changé à la première condition de travail.

4. Dispositif de signalisation selon la revendication 2, caractérisé en ce que lesdits moyens de pré-charge comportent au moins un ressort (10a) intercalé de manière opératoire entre le microinterrupteur (4) et la deuxième portion de travail (8).

5. Dispositif de signalisation selon la revendication 1, caractérisé en ce qu'il comporte en outre au moins une plaque de transduction (10) intercalée de manière opératoire entre la deuxième portion de travail (8) et ledit microinterrupteur (4) et agissant sur la deuxième portion de travail elle-même, sur une surface de contact donnée.

6. Dispositif de signalisation selon la revendication 1, caractérisé en ce que le fluide de travail contenu dans l'enveloppe flexible (5) est un liquide.

7. Dispositif de signalisation selon la revendication 1, caractérisé en ce que le fluide de travail contenu dans l'enveloppe flexible (5) est un fluide gazeux.

8. Dispositif de signalisation selon la revendication 1, caractérisé en ce que ladite enveloppe flexible (5) est remplie dudit fluide de travail essentiellement jusqu'à la moitié de sa capacité.

9. Dispositif de signalisation selon la revendication 1, caractérisé en ce que ladite enveloppe flexible (5) comporte un élément tubulaire réalisé en matière plastique et soudé à chaud à ses extrémités.

10. Dispositif de signalisation selon la revendication 1, caractérisé en ce que lesdites première et deuxième portions (6, 8) sont alignées consécutivement dans une direction horizontale, ledit microinterrupteur (4) étant situé au-dessus de ladite portion de travail (8).

11. Dispositif de signalisation selon la revendication 1, caractérisé en ce que ladite structure de logement et support (3) a des surfaces de butée (11) disposées latéralement par rapport à la première portion de travail (6) de l'enveloppe flexible (5) et agencées de telle sorte que ledit réservoir (2) peut prendre appui sur celles-ci quand le microinterrupteur (4) est changé à la première condition de travail.

12. Dispositif de signalisation selon la revendication 1, caractérisé en ce que ledit réservoir (2) est engagé de manière amovible à ladite structure de logement et support (3).
